Europäisches Patentamt

European Patent Office

Office européen des brevets

(11) Numéro de publication: **0 088 659**
A1

(12) # DEMANDE DE BREVET EUROPEEN

(21) Numéro de dépôt: 83400350.1

(22) Date de dépôt: 18.02.83

(51) Int. Cl.³: **A 01 B 29/04**

(30) Priorité: 05.03.82 FR 8203695

(43) Date de publication de la demande: 14.09.83
Bulletin 83/37

(84) Etats contractants désignés: BE DE GB IT NL

(71) Demandeur: LELY FRANCE (Société à Responsabilité
Limitée), Km 4- Route de Paris, Valframbert
F-61004 Alencon Cedex (FR)

(72) Inventeur: Dammoneville, François, "Bourbon",
F-61250 Damigni (FR)

(74) Mandataire: Loyer, Bertrand et al, Cabinet Pierre
Loyer 18, rue de Mogador, F-75009 Paris (FR)

(54) Perfectionnements aux rouleaux agricoles.

(57) Rouleau de compactage du sol comportant des saillies,
dans lequel les saillies (7) sont constituées par un fer plat replié
de façon à comporter une branche radiale (7a) et une branche
tangentielle (7b), cette dernière prenant contact avec le sol pratiquement à plat.

1

## Perfectionnements aux rouleaux agricoles.

La présente invention est relative à des perfectionnements aux rouleaux agricoles et plus particulièrement aux rouleaux destinés à être associés à une herse rotative.

Il est connu de disposer à la surface d'un rouleau des aspérités ou saillies qui ont pour objet d'améliorer l'effet de damage recherché. Cependant, ces dispositifs présentent l'inconvénient de s'encrasser lorsque la terre est humide et collante. On a en conséquence proposé, en particulier dans le certificat d'utilité 2.281.050 du 23 juillet 1975 de disposer des éléments racleurs entre les rangées circulaires de saillies. Il s'est cependant avéré que pour que ces éléments racleurs soient efficaces, il fallait d'une part les placer à au moins un tiers du rayon de l'enveloppe du cylindre en dessous de l'axe de rotation du rouleau et d'autre part que la partie du racleur qui est en contact avec l'enveloppe fasse avec l'horizontale un angle inférieur à 25°. Cela est notamment décrit et représenté au brevet 2.372.583 déposé le 30 novembre 1977 par la société C. VAN DER LELY N.V.

La présente invention a pour objet des perfectionnements à ce type de rouleau compacteur.

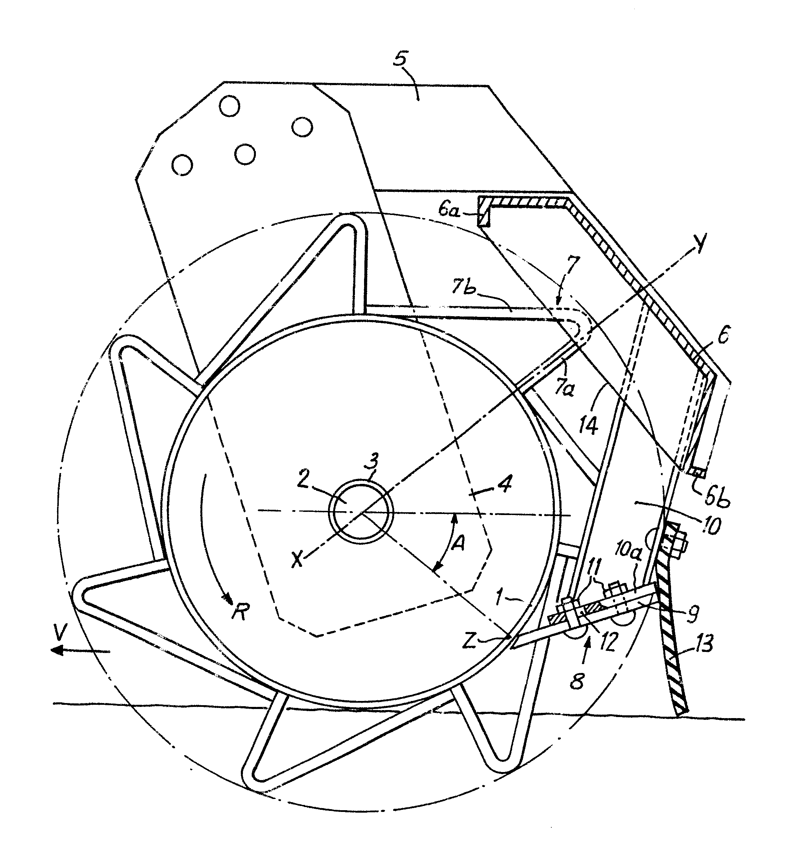

A titre d'exemple non limitatif, on a représenté au dessin annexé une vue latérale en coupe d'un rouleau comportant les perfectionnements objet de la présente invention.

En se reportant à cette figure, on voit que le rouleau est constitué par une enveloppe cylindrique 1 dont l'arbre de rotation 2 repose, à ses deux extrémités, dans un palier 3 porté par un bras 4. Chacun des deux bras 4 est relié par un support 5 à une poutre transversale 6.

De préférence, comme cela est représenté, la poutre transversale 6 est constituée par un fer cornière dont la forme générale affecte celle d'un U aux branches évasées. La branche centrale du U est inclinée pratiquement à 45°, la branche supérieure est pratiquement horizontale et la branche inférieure est pratiquement verticale. Le U aux branches évasées ainsi réalisé est disposé de façon que son plan médian représenté sur la figure par la ligne en tiretés XY passe pratiquement par l'axe de l'arbre 2 de l'enveloppe 1

De la sorte, la poutre 6 constitue non seulement un élément de support pour le cylindre 2 et les racleurs qui seront décrits ci-après, mais également un capotage entourant partiellement le rouleau.

Sur la surface du cylindre 2, on a disposé une pluralité de saillies telles que 7. Chaque saillie 7 est constituée par un fer plat replié en deux branches 7a et 7b, la branche 7a étant pratiquement perpendiculaire à la surface du cylindre 2 et la branche 7b étant pratiquement tangente à cette surface. Il en résulte que, le rouleau tournant selon la flèche R, lorsqu'il se déplace dans la direction V, les branches 7b sont pratiquement en position horizontale lorsqu'elles viennent en contact avec le sol tandis que les branches 7a étant radiales assurent le meilleur entraînement possible du rouleau.

Contrairement aux dispositifs brise-mottes antérieurs dans lesquels les saillies sont constituées par des dents découpées dans des lames, les saillies 7 sont constituées par un fer plat de façon à appuyer sur le sol. En d'autres termes, ces saillies n'ont pas pour objet de briser des mottes en les découpant du fait du poids du rouleau ; ces saillies ont pour but de tasser le sol par appui.

Dans l'exemple représenté, le rayon du cylindre 2 est de 136,5 mm et la hauteur des saillies de 65 mm, c'est-à-dire que les saillies ont une hauteur correspondant à environ la moitié du rayon. De même dans cet exemple les saillies 7 sont faites en fer plat de 25 x 8mm.

Les saillies 7 sont disposées sur la surface du cylindre 2 le long de cercles parallèles entre eux et équidistants, et laissent ainsi entre elles des espaces qui risquent d'être encrassés par de la terre humide et/ou collante.

Afin d'éviter cela dans chacun de ces espaces, on a disposé un élément racleur 8.

Chaque élément racleur 8 est constitué par une lame 9, rectangulaire occupant presque toute la largeur de l'espace compris entre deux groupes de saillies 7.

Chaque lame 9 est portée par un support 10 et tous les supports 10 sont portés par la poutre 6.

Chaque lame 9 est fixée à une semelle 10a disposée à l'extrémité du support 10 par des boulons et écrous 11 passant dans des lumières 12 ce qui permet au fur et à mesure de l'usure de faire coulisser la lame 9.

De préférence, bien que cela ne soit pas représenté, chaque support 10 est de longueur réglable de façon à pouvoir remonter ou abaisser la lame 9.

Comme cela est représenté, le point Z de contact entre une lame 9 et la surface du cylindre 2 est tel que l'angle A compris entre la droite joignant le point Z à l'axe de rotation et l'horizontale passant par ce point soit de

4

l'ordre de 40° et l'angle fait par la lame 9 avec l'horizontale en ce point est de l'ordre de 20°.

De préférence, comme cela est représenté, derrière chaque lame 9 le support 10 porte une bande de matière souple 13 dont la longueur est telle qu'elle effleure à peine le sol. De préférence, les bandes 13 sont faites en découpant des courroies de transmission en caoutchouc toilé d'environ 8 mm d'épaisseur.

Lorsque la terre est sèche et légère ces sortes de petits volets souples empêchent la terre de remonter et assurent une sorte de lissage.

De préférence, la rigidité de la poutre transversale 6 est renforcée par des nervures 6a et 6b disposées aux deux extrémités des branches de l'U et/ou par des cloisons intermédiaires 14.

Revendications de brevet.

1. Rouleau de compactage du sol du type comportant une pluralité de saillies (7) disposées sur la surface d'un cylindre (2) le long de cercles parallèles, ces saillies (7) comportant un bord radial et un bord pratiquement tangent audit cylindre, caractérisé par le fait que ces saillies (7) sont constituées d'un fer plat replié de façon à comporter une branche radiale (7a) et une branche pratiquement tangentiellement (7b), cette dernière prenant contact avec le sol pratiquement à plat.

2. Rouleau selon la revendication 1, dans lequel chaque espace compris entre deux groupes de saillies (7) comporte un élément racleur (8) constitué par une lame oblique (9) porté par un support (10) lui-même porté par une poutre transversale (6).

3. Rouleau selon la revendication 2, dans lequel chaque lame peut coulisser parallèlement à elle-même et être fixée ainsi dans toute position voulue pour compenser son usure.

4. Rouleau selon la revendication 3, dans lequel la longueur de chaque support (10) est réglable de façon à déterminer la position en hauteur de la lame (9).

5. Rouleau selon l'une quelconque des revendications 2 à 4, dans lequel chaque support (10) porte, derrière chaque lame (9) un volet déformable (13) pratiquement vertical et effleurant à peine le sol.

6. Rouleau selon l'une quelconque des revendications 2 à 5, dans lequel la poutre transversale (6) est constituée par un profilé en U évasé, coiffant partiellement le rouleau en arrière et en haut.

7. Rouleau selon la revendication 6, dans lequel la partie centrale du U est inclinée à environ 45°.par rapport à l'horizontale, la branche supérieure étant pratiquement horizontale et la branche inférieure pratiquement verticale.

8. Rouleau selon la revendication 7, dans lequel la poutre transversale (6) est renforcée par des cloisons (14).

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y,D | FR-A-2 281 050  (AMAZONEN-WERKE H. DREYER) <br> * Page 6, lignes 8-13; figure 1 * | 1,2,3, 6 | A 01 B  29/04 |
| Y | FR-A-2 445 096  (AMAZONEN-WERKE H. DREYER) <br> * Page 6, lignes 6-40; page 7, lignes 1-20; figures 1,2 * | 1,2,3, 4 | |
| A | DE-C- 540 228  (HEINEMAN) <br> * En entier * | 1 | |

DOMAINES TECHNIQUES RECHERCHES (Int. Cl. ³)

A 01 B

Le présent rapport de recherche a été établi pour toutes les revendications

| Lieu de la recherche | Date d'achèvement de la recherche | Examinateur |
|---|---|---|
| LA HAYE | 02-05-1983 | VERDOODT S.J.M. |